# EUROPEAN PATENT SPECIFICATION

(11) **EP 2 090 151 B1**
(45) Date of publication and mention of the grant of the patent: **04.05.2011**
(21) Application number: 08015452.9
(22) Date of filing: 02.09.2008
(51) Int. Cl.: A01D 34/86, E01C 23/09

(54) **Synthetic grass-like turf working machine**
Kunstrasenbearbeitungsmaschine
Machine de travail d'un gazon synthétique

(30) Priority: 12.02.2008 IT MI20080055 U
(43) Date of publication of application: 19.08.2009
(73) Proprietor: RASOR ELETTROMECCANICA S.R.L., 20161 Milan (IT)
(72) Inventor: Spinelli, Lorenzo, 20158 Milan (IT); Spinelli, Paolo, 20158 Milan (IT)
(74) Representative: Carloni, Franco

(56) References cited:
- EP-A- 1 530 892
- EP-A- 1 958 496
- WO-A-83/02969
- US-A- 4 900 094
- US-A- 4 916 855
- US-A1- 2002 153 145

## Description

The present invention relates to a machine intended particularly, but not exclusively, for finishing a synthetic grass-like turf, of the kind ordinarily used for making a playing surface of a recreational or sports installation, as well as a passageway or a decorative surface of an indoor or outdoor space.

The finishing of a synthetic grass turf essentially consists in a cutting operation which is performed on a more or less large portion of the turf in the laid out condition, or during the iaying out operation, for the purpose of forming and functionally completing a playing surface, a passageway or a decorative surface.

A problem which is, for instance, known in the construction of a playing surface for a recreational or sports installation made of synthetic grass turf is to delimit and divide the playing surface into distinct areas, in accordance with various rules of play, by means of marking lines having a colour different from that of the synthetic grass turf, in order to be easily visible on the playing surface. This problem is usually solved with a hand operated cutting tool by cutting a strip having a predefined shape and measure from the synthetic grass turf and inserting in place thereof a corresponding strip of synthetic grass, or other suitable material, of different colour.

A different problem, which arises, instead, when forming a passageway or a decorative surface of an indoor or outdoor space is concerned with the finishing of the edges of the parts which form the synthetic grass turf, for the purpose of eliminating the excess matter and permitting said parts to be composed and laid out according to a desired pattern. Usually, this problem is also solved by performing the finishing operation with a hand operated tool.

Because the cutting operations, as mentioned above, are carried out by hand, often with the use of rudimentary tools, the operatives are compelled to stay for a long time in an uncomfortable working position in which they are usually bent downwards, and this has detrimental effects not only to their health, but also to the quality of work. Furthermore, because of the inadequateness of the tools applied, and the manner in which such tools are used, a large amount of scraps and trimmings are produced, the removal of which requires continuous attending by the operative.

These drawbacks not only increase the time required for covering a surface with a synthetic grass turf, but they also can considerably drive up the cost of making, as well as maintaining such surface, at the point of causing the investment in this kind of surface covering to be, in some instances, too expensive.

In order to obviate the aforementioned drawbacks and to provide a synthetic grass-like turf working machine by which the finishing and trimming operations on synthetic grass-like turfs can be performed in a more accurate and rapid manner, and also with less effort on the part of the operatives assigned to said operations, it is known in the art to use
a machine comprising a chassis supported on ground wheels and a pair of cutting units mounted on said chassis, wherein said cutting units include a cutting tool, and means for driving said cutting tool, and are arranged parallel one to another and spaced apart one from another at a distance which is adjustable along a direction substantially transverse to the cutting direction. A machine of this kind is disclosed e.g. in EP-A-1 530 892.

The object of the present invention is to improve the cutting effectiveness of a machine of the kind mentioned above. In order to achieve this object, the present invention provides a machine comprising a chassis supported on ground wheels and a pair of cutting units mounted on said chassis, wherein said cutting units include a cutting tool, and means for driving said cutting tool, and are arranged parallel one to another and spaced apart one from another at a distance which is adjustable along a direction substantially transverse to the cutting direction, characterised in that the cutting tool of each cutting unit of the machine comprises a vertical rotary blade and associated therewith a vertical fixed counter-blade, and in that the blades of the cutting units remain in contact with the corresponding counter-blades while rotating.

With this arrangement, the cutting motion of the rotary blade relative to the counter-blade results in a scissor-like motion, by which a clean and precise cut can be made without producing scraps and causing flaws.

Advantageously, the chassis of the machine is provided with a handlebar which extends upwardly to a suitable height and is inclined backwards in a small degree, for the purpose of allowing a user to comfortably grasp it. In this way, a user can perform the cutting operations while remaining always in an upright position.

Suitably, the chassis of the machine has a pair of fixed front ground wheels and a pair of pivotable rear ground wheels, in order to permit the user to guide the machine in a desired direction.

Preferably, the chassis of the machine is provided with a connection means for connecting thereto a rigid rod-like member which is intended to be fixed to the ground and is adapted to pivotally constrain the chassis of the machine about a fixing point in the ground, for the purpose of permitting the machine to be moved by a user along a circular path about said fixing point.

These and other features of the machine according to the present invention will become more fully apparent from the following detailed description of a preferred embodiment thereof which is illustrated in the appended drawings, wherein:

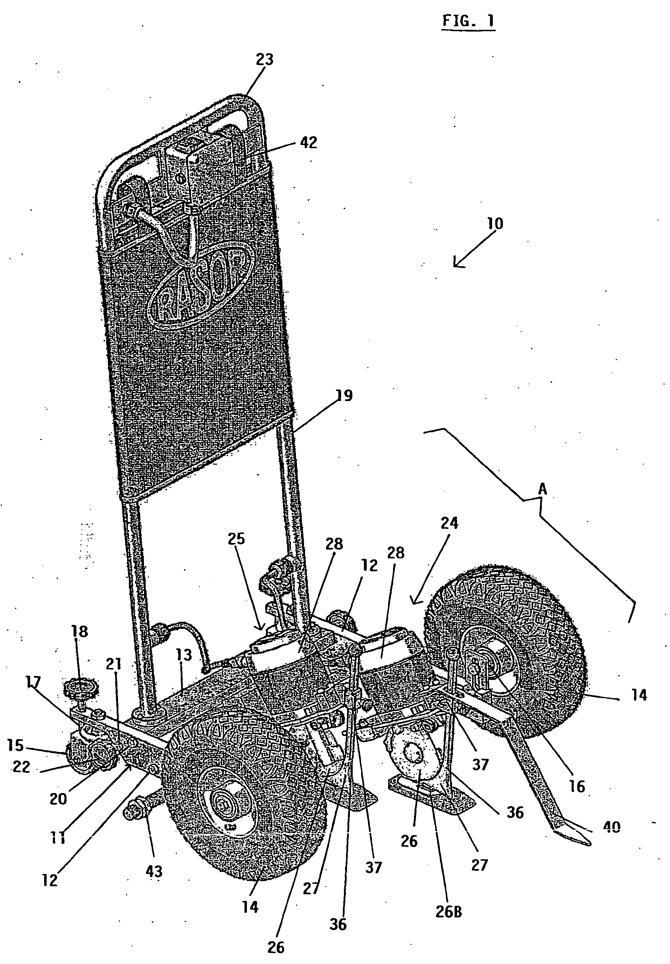

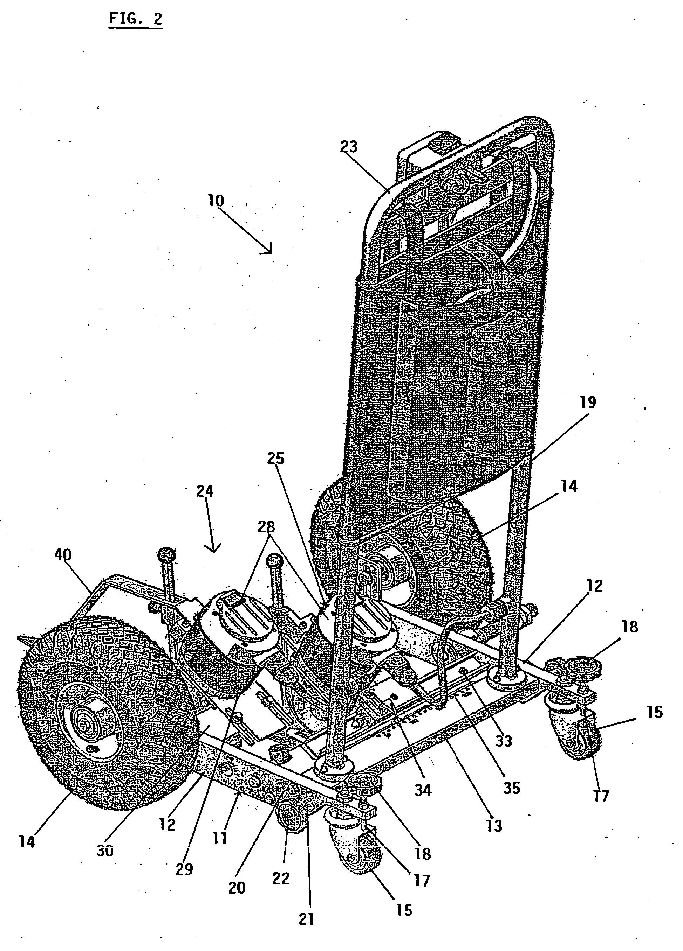

Figures 1 and 2 are a front and a rear axonometric view, respectively, of the machine according to the invention,

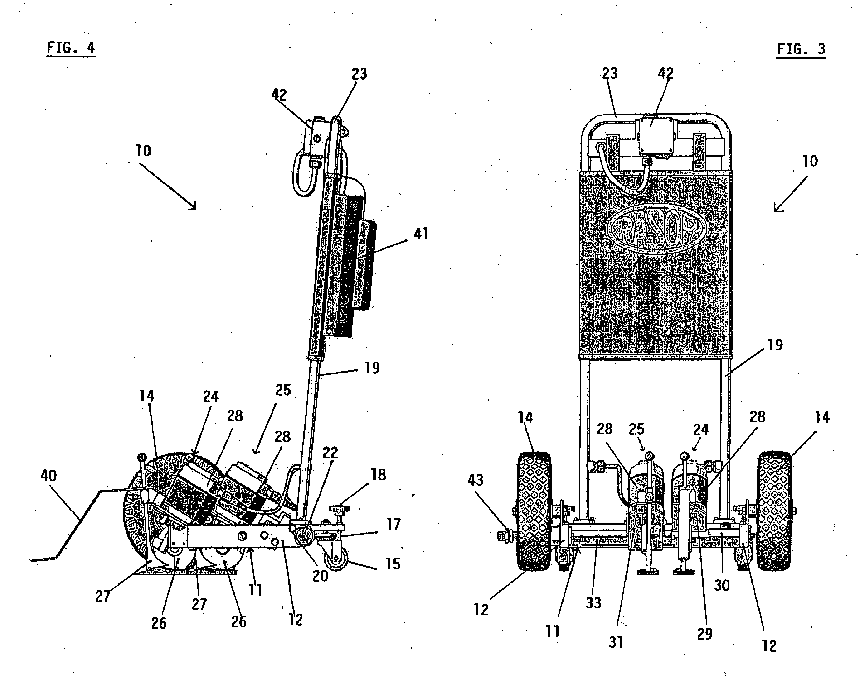

Figure 3 is a front elevation view of the machine of Figure 1,
Figure 4 is a side elevation view of the machine of Figure 1,

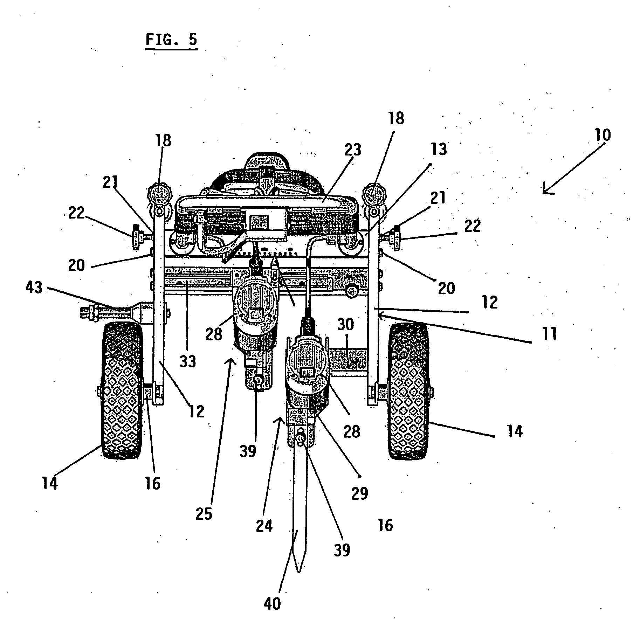

Figure 5 is a top view of the machine of Figure 1, and

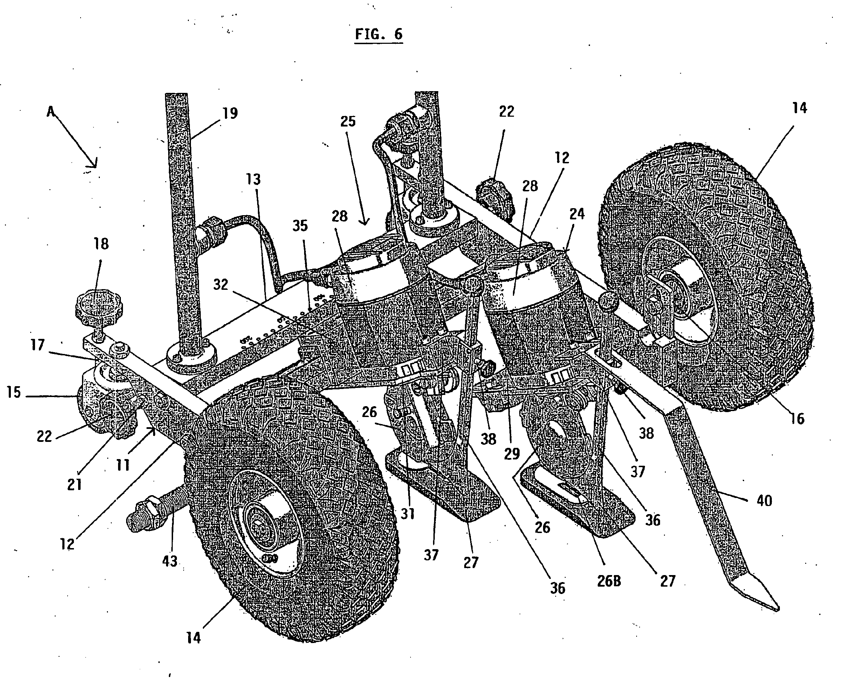

Figure 6 is an enlarged view of detail A of Figure 1.

With reference to the Figures of the drawings, there is shown a preferred embodiment of a machine according to the present invention, generally designated by 10. The machine comprises a chassis 11 formed of two side members 12 connected to each other by a cross member 13. The chassis 11 is mounted on two front wheels 14 and two rear wheels 15. The front wheels 14 are of the fixed kind and each is mounted on a pin 16 which is connected to a corresponding one of the side members 12 so as to be adjustable in height. The rear wheels 15, on the contrary, are of the swivel kind and, if necessary, they can be fixed in a determined direction by means of a suitable stop member which is operable by a knob 18.

A handlebar 19, in the shape of an inverse U, is fastened to the upper side of the cross member 13. In use of the machine, the handlebar 19 extends upwardly to a suitable height and has a small backward inclination with respect to a vertical line, in order to allow the user to comfortably grasp it. When the machine is not in use, the handlebar 19 can be folded forwards in a substantially flat position, in order to reduce the dimensions of the machine when it is transported or sheltered. To this purpose, the cross member 13 which supports the handlebar 19 is connected to the side members 12 so as to be rotatable on suitable pins 20 and cross member releasable stop means 21, which are operable by knobs 22, are provided for securing the handlebar 19 in an upright position for use and for releasing it from that position when the machine is not in use. The upper bent portion of the handlebar 19 forms a suitable handgrip 23 to allow the user to push and move the machine in a desired direction.

In the space between the two side members 12 of the chassis there are mounted two cutting units, generally designated by 24 and 25. Each cutting unit 24, 25 comprises a rotating vertical blade 26 and a fixed counter-blade 26B which is arranged in contact with the blade. The axis of rotation of each rotating blade 26 is parallel to axis of rotation of the front wheels 14 of the machine. In this way, the direction of cut of the rotating blades 26 is always parallel to the direction of movement of the machine. Each of the rotating blades 26 is driven by a suitable electric motor 28. The electric motor 28 of the cutting unit 24 is mounted on a mounting plate 29 which is secured to a supporting arm 30. This supporting arm 30 is arranged horizontally and is attached to one of the side members 12 of the chassis. The electric motor 28 of the other cutting unit 25 is mounted instead on a mounting plate 31 which is secured to a slide 32. This slide 32 is movably arranged on a transverse support 33 which is attached at its ends to the side members 12 and serves as a stiffening member for the chassis 11. In this way, the user can adjust the transverse distance between the cutting units 24 and 25, depending on the desired width of the strip of material to be cut. In practice, a range of adjustment of the width of the strip from 5 to 20 cm is adequate in most applications of the machine. In order to permit the user to make the adjustments in a simple and accurate manner, an indicator 34 is provided which is attached to the slide 32 of the cutting unit 25 and is movable thereby on a suitable graduated scale 35 positioned on the upper side of the cross member 13.

While rotating, each blade 26 of the cutting units 24, 25 remains in contact with its corresponding counter-blade 26B. In this way, the cutting motion of the blades 26 relative to the counter-blades 26B results in a scissor-like motion. The rotating blades 26 and the counter-blades 26B are made of a metallic material. Conveniently, the metallic material of the counter-blades 26B is harder than that of the rotating blades 26, so as to be capable of resisting wear caused by the relative movement in contact with those blades. Each of the rotating blades 26 is provided with a synthetic turf fibre deviating device 27 which is configured in a manner so that the corresponding blade will cut only the synthetic turf base. The fibre deviating device 27 is fastened to an adjusting rod 36 which is displaceably supported in a guide block 37. In this way, the position of the adjusting rod 36 and, thus, of the fibre deviating device 27 can be adjusted vertically. The adjusting rod 36 can be fixed in a desired position by a releasable stop member 38 which is operable with a suitable knob 39.

A distinctive feature of the machine according to the invention is that the cutting units 24, 25 are complementary one to the other and they are arranged so that the material cut will run off the right of the left cutting unit 24 and the left of the right cutting unit 25. This permits a strip of material having a uniform width to be cut while the machine is advanced in a desired direction.

Another distinctive feature of the machine according to the invention is that the width of the strip of material to be cut can be chosen in a certain range according to the user's needs. The machine, thus, lends itself to be used for finishing the playing surfaces with different kinds of marking lines, according to the rules of play of the sport and recreational activities for which the surfaces are used.

The machine 10 can also be used for trimming a synthetic grass turf. In this case, only the cutting unit 24, which is fixedly connected to the chassis 11 of the machine, is operated.

For the purpose of assisting the user in keeping the machine in a desired direction of movement, a directing member 40 is provided which is positioned in front of the cutting unit 24 and is rigidly connected to the support arm 29.

The electric motors are powered by a supply network through an appropriate cable. A control box 42 of the electric motors is fixed on the handlebar 19.

The machine frame can be provided with connecting means 43 for connection to a rigid rod member (not shown) which is intended to be fixed to the ground and is adapted to constrain the chassis of the machine to rotate about a fixed point in the ground, with the purpose of permitting the machine to move along a circle around said fixing point by action of the user.

Although the machine according to the invention has been described and illustrated with reference to a preferred embodiment, it is to be understood that various modifications and changes can be made thereto by a person skilled in the art without departing from the scope of the appended claims.

## Claims

1. A machine (10) comprising a chassis (11) supported on ground wheels (14, 15) and a pair of cutting units (24, 25) mounted on said chassis (11), wherein said cutting units (24, 25) include a cutting tool, and means for driving said cutting tool, and are arranged parallel one to another and spaced apart one from another at a distance which is adjustable along a direction substantially transverse to the cutting direction, **characterised in that** the cutting tool of each cutting unit (24, 25) of the machine comprises a vertical rotary blade (26) and associated therewith a vertical fixed counter-blade (26B), and **in that** the blades (26) of the cutting units (24, 25) remain in contact with the corresponding counter-blades (26B) while rotating.

2. The machine according to claim 1, **characterised in that** the chassis (11) of the machine is provided with a handlebar (19) which extends upwardly to a suitable height and is inclined backwards in a small degree.

3. The machine according to claim 1, **characterised in that** the chassis (11) is mounted on two front fixed wheels (14) and two rear swivel wheels (15).

4. The machine according to claim 1, **characterised in that** the machine frame is provided with connecting means (43) for connection to a rigid rod member which is intended to be fixed to the ground and is adapted to constrain the machine frame to rotate about a fixed point in the ground.

5. The machine according to claim 1, **characterised in that** an indicator (34) is provided which is movable on a suitable graduated scale (35) for determining the adjustable distance between the cutting units (24, 25).

6. The machine according to claim 1, **characterised in that** the cutting units (24, 25) are complementary one to the other and they are arranged so that the material cut will run off the right of the left cutting unit and the left of the right cutting unit, permitting thereby to cut a strip of material having a uniform width while the machine is advanced in a desired direction.

## Patentansprüche

1. Maschine (10) bestehend aus einem von Bodenrädern (14, 15) getragenen Rahmen (11) und zwei auf den Rahmen (11) montierte Schneideinheiten (24, 25), worin die zwei Schneideinheiten (24, 25) ein Schneidwerkzeug und Antriebsmittel für das Schneidwerkzeug umfassen, wobei die Schneideinheiten parallel zueinander und mit einem Abstand von einander angeordnet sind, der entlang einer im wesentlichen transversalen Richtung zur Schneidrichtung regulierbar ist, **dadurch gekennzeichnet, dass** das Schneidwerkzeug einer jeden Schneideinrichtung (24, 25) der Maschine aus einer senkrecht drehbaren Scheibe (26) und einer dafür zugeordneten senkrecht feststehenden Gegenscheibe (26B) besteht, und **dadurch**, dass die Scheiben (26) der Schneideinheiten (24, 25) mit den entsprechenden Gegenscheiben (26B) während der Rotation in Verbindung bleiben.

2. Maschine nach Anspruch 1, **dadurch gekennzeichnet, dass** der Maschinenrahmen (11) mit einer Lenkstange (19) versehen ist, die sich nach oben bis zu einer geeigneten Höhe erstreckt und eine leichte Rückwärtsneigung aufzeigt.

3. Maschine nach Anspruch 1, **dadurch gekennzeichnet, dass** der Rahmen (11) auf zwei feststehenden Vorderrädern (14) und zwei drehbaren Hinterrädern (15) montiert ist.

4. Maschine nach Anspruch 1, **dadurch gekennzeichnet, dass** der Maschinenrahmen mit Verbindungsmitteln (43) zum Verbinden mit einem steifen Stangenelement versehen ist, das zum Befestigen am Boden bestimmt und geeignet ist, den Maschinenrahmen zwangsweise um einen feststehenden Punkt am Boden zu drehen.

5. Maschine nach Anspruch 1, **dadurch gekennzeichnet, dass** ein Anzeigeelement (34) vorgesehen ist, das auf einer geeigneten Maßskala (35) beweglich ist, um den einstellbaren Abstand zwischen den Schneideinheiten (24, 25) zu bestimmen.

6. Maschine nach Anspruch 1, **dadurch gekennzeichnet, dass** die Schneideinheiten (24, 25) untereinander komplementär und derart angeordnet sind, dass das abgeschnittene Material rechtsseitig von der links angeordneten Schneideinrichtung, beziehungsweise linksseitig von der rechts angeordneten Schneideinheit weggeführt wird, wobei es möglich ist, einen Materialstreifen einheitlicher Breite abzuschneiden, während die Maschine entlang einer gewünschten Richtung vorgeschoben wird.

## Revendications

1. Machine (10) comprenant un châssis (11) supporté sur des roues (14, 15) au sol et une paire d'unités (24, 25) de coupe montées sur le châssis (11), les unités (24, 25) de coupe comprenant un outil de coupe et des moyens d'entraînement de l'outil de coupe et étant disposées parallèlement l'une à l'autre et à distance l'une de l'autre, à une distance qui est réglable le long d'une direction sensiblement transversale à la direction de coupe, **caractérisée en ce que** l'outil de coupe de chaque unité (24, 25) de coupe de la machine comprend une lame (26) verticale tournante et, associée à celle-ci, une contre-lame (26B) verticale fixe, et **en ce que** les lames (26) des unités (24, 25) de coupe restent en contact avec les contre-lames (26B) correspondantes pendant qu'elles tournent.

2. Machine suivant la revendication 1, **caractérisée en ce que** le châssis (11) de la machine est pourvu d'un guidon (19), qui s'étend vers le haut jusqu'à une hauteur appropriée et qui est incliné vers le bas d'un degré petit.

3. Machine suivant la revendication 1, **caractérisé en ce que** le châssis (11) est monté sur deux roues (14) avant fixes et sur deux roues (15) arrière pivotantes.

4. Machine suivant la revendication 1, **caractérisée en ce que** le bâti de la machine est pourvu de moyens (43) de liaison à un élément rigide en forme de tige, qui est destiné à être fixé au sol et qui est conçu pour obliger le bâti de la machine à tourner autour d'un point fixe dans le sol.

5. Machine suivant la revendication 1, **caractérisée en ce qu'**il est prévu un indicateur (34), qui est mobile sur une échelle (35) graduée appropriée, pour déterminer la distance réglable entre les unités (24, 25) de coupe.

6. Machine suivant la revendication 1, **caractérisée en ce que** les unités (24, 25) de coupe sont complémentaires l'une de l'autre et elles sont disposées de manière à ce que le matériau coupé sorte de la droite de l'unité de coupe qui est à gauche et de la gauche de l'unité de coupe qui est à droite, permettant ainsi de couper une bande de matériau ayant une largeur uniforme, alors que la machine avance dans une direction souhaitée.
